# EUROPÄISCHE PATENTSCHRIFT

(11) **EP 3 209 982 B1**
(45) Veröffentlichungstag und Bekanntmachung des Hinweises auf die Patenterteilung: **19.08.2020**
(21) Anmeldenummer: 15781671.1
(22) Anmeldetag: 19.10.2015
(51) Int. Cl.: G01J 1/42, G01J 1/44, G01J 1/02

(54) **VERFAHREN ZUM ÜBERWACHEN EINER STRAHLUNG**
METHOD FOR MONITORING RADIATION
PROCÉDÉ DE SURVEILLANCE D'UN D'UN RAYONNEMENT

(30) Priorität: 21.10.2014 DE 102014115304
(43) Veröffentlichungstag der Anmeldung: 30.08.2017
(73) Patentinhaber: KUKA Deutschland GmbH, 86165 Augsburg (DE)
(72) Erfinder: SCHÄFER, Ansgar, 52074 Aachen (DE); OTT, Lars Soeren, 52353 Düren (DE); GOEBEL, Klaus R., 64289 Darmstadt (DE)
(74) Vertreter: Böss, Dieter Alexander
(86) Internationale Anmeldenummer: PCT/EP2015/074163
(87) Internationale Veröffentlichungsnummer: WO 2016/062669

(56) Entgegenhaltungen:
- DE-A1- 2 245 507
- DE-A1- 19 940 476
- DE-A1-102006 026 555

## Beschreibung

Die Erfindung bezieht sich insbesondere auf ein Verfahren zur Überprüfung der Funktionsfähigkeit eines optischen Sensors, der eine Strahlung einer Strahlenquelle überwacht, wobei der optische Sensor bei Beaufschlagung mit der Strahlungsquelle ein Abschaltsignal für die Strahlenquelle erzeugt.

Moderne Hochleistungslaser werden in der industriellen Fertigung zur Materialbearbeitung eingesetzt. Portalanlagen und Robotersysteme erlauben dem Anwender eine maximal flexible Führung der Laserstrahlung zum Werkstück. Kann die Laserenergie in Lichtwellenleitern zum Bearbeitungsort geführt werden, wird die Dynamik dieser Systeme noch wesentlich erhöht. Zur Sicherung von Leib und Leben werden passiv wirkende (absorbierende) Schutzwände, meist aus Metall, mit einfachen oder mehrfach hintereinander angeordneten Platten um den Laserbereich aufgebaut, die so genannten Einhausungen. Innerhalb dieser Schutzwände tritt Laserstrahlung mit extrem hoher Energiedichte auf.

Durch das Bearbeiten der Werkstücke kommt es zusätzlich zu unkontrollierten Reflexionen. Direkte oder indirekte Laserstrahlung, im schlimmsten Fall der Rohstrahl, trifft auf die Umhausung, die ihrerseits die Aufgabe hat Personen außerhalb vor der Strahlung zu schützen. Je nach Betriebsart der Laseranlage muss dieser Schutz für einen Zeitraum t gewährleistet sein, z. B. bis der Bediener der Anlage den Fehler bemerkt und diese stillsetzen kann. Durch die hohe Laserenergie und die oft geringen Abstände zur Schutzwand wird dieser Zeitraum t bis zur Abschaltung immer geringer, oder die Materialanforderungen an die Einhausung immer anspruchsvoller. Ausschließlich passive Schutzwände sind daher nur bedingt zur Absicherung von Personen geeignet.

Die Patentveröffentlichungen DE 100 17 284 C1, DE 103 25 906 A1, DE 196 29 037 C1 betreffen rein den passiven Schutz durch verschiedene Ausführungen der Oberflächenbeschaffenheiten bzw. der Zwischenräume der Wände. Es werden die unterschiedlichen Wärmeleiteigenschaften oder das Reflexionsvermögen zur Realisierung der passiven Strahlensicherheit genutzt. In der Praxis sind die Oberflächen der Schutzwände jedoch bereits nach kurzer Zeit durch Öl, Schmutz und Staub dermaßen verunreinigt, dass die ursprünglichen Eigenschaften der Schutzvorrichtungen nicht mehr gegeben sind.

Die DE 36 38 874 C2 beschreibt ein aktives Verfahren, wobei die dem Laser zugewandte Innenwand, ähnlich einer Schmelzsicherung, mit einem elektrisch aktiven Leiter ausgerüstet ist. Gegenüber der hier beschriebenen Anordnung ist eine sichere Funktion dabei nur gegeben, wenn die Innenwand in ihrem Absorptionsverhalten exakt auf die Laserwellenlänge abgestimmt ist und zusätzlich eine elektrisch aktive Sicherung enthält. Um dieses System z. B. für Faserlaser mit sehr kleinem Strahldurchmesser verwenden zu können, müsste der elektrische Leiter in sehr engen Mäandern in die Wand eingebettet sein, was einen hohen konstruktiven und kostenintensiven Aufwand bedeutet.

Die DE 89 08 806 beschreibt eine zu der oben beschriebenen, nahezu identische Anordnung.

Die DE 199 40 4 76 A1 beschreibt eine aktive Anordnung zur Erkennung optischer Strahlung mittels beliebiger Sensoren. Jedoch ist in diesem Verfahren die Ausführung der Schutzwand ein wesentlicher Bestandteil der Funktion. Die Verwendung von Wärmesensoren an der dem Laser zugewandten Wand erfordert, je nach den Wärmeleiteigenschaften des Wandmaterials eine nicht unerhebliche Anzahl von Sensoren für eine sichere Abschaltung. Die beschriebene Variante mit optischen Sensoren und einer mit Folie ausgestatteten Lochblechwand innen erfordert wiederum speziell konstruierte Wandelemente.

Aus der EP-B-0 321 965 sind eine Anordnung sowie ein Verfahren zum Detektieren einer Laserstrahlung bekannt, die aus einem Arbeitsbereich austritt. Hierzu wird der Arbeitsbereich von einer Wand umgeben, in der ein Detektor angeordnet ist, über den die Illumination gemessen wird, die durch auf die Wand auftreffende Laserstrahlung erzeugt wird. Zur Überprüfung des Sensors ist in einem die Aussparung umgebenden Gehäuse ein Photoemitter angeordnet, dessen Strahlung von dem Empfänger zur Überprüfung dessen Funktion empfangen wird.

Ein Sicherheitssystem zur Überprüfung von Laserstrahlen ist der GB-A-2 171 513 zu entnehmen. Dabei wird der Laserstrahl mittels eines Empfängers detektiert. Zur Überprüfung der Funktionstüchtigkeit des Empfängers ist eine Infrarotlichtquelle vorgesehen, dessen Strahlung von dem Empfänger erfasst wird.

Aus der DE 10 2006 026 555 A1 ist ein Verfahren zum Detektieren von optischer Strahlung, wie Laserstrahlung, in einem definierten Teilvolumen einer Schutzeinhausung bekannt. Bei Eindringen des Laserstrahles werden Signale für die Abschaltung des Lasers ausgelöst.

Aus der EP 1 746 334 B1 ist eine Laserschutzwand zur Abschirmung eines Laserbereiches bekannt. In der Wand sind Sensoren angeordnet, die auf "HotSpots" auf der Innenwand reagieren und entsprechend Ausgangssignale für die Abschaltung eines Laserstrahles bereitstellen.

Beiden Veröffentlichungen ist es gemeinsam, dass im Innern des zu überwachenden Wandvolumens auch Lichtquellen für das Aussenden eine Prüfstrahlung für die bei dieser Sicherheitstechnik notwendige Selbstüberwachung (Funktionsprüfung der Sensoren) vorhanden sind.

Aus DE 10 2008 016 856 A1 ist ein Strahlenschutzelement bekannt, in dem Sensoren das Eindringen von Licht einer externen in der Kabine befindlichen Referenzstrahlungsquelle nach Durchdringen der Hülle des Strahlenschutzelementes detektieren und entsprechend Signale für die Abschaltung des Lasers bereit stellen. Eine Selbstüberwachung der Sensoren ist nicht gegeben.

Die DE 2 245 507 A bezieht sich auf ein Verfahren zur Arbeitspunktregelung von Halbleiter-Avalanche-Fotodioden. Dabei wird der Arbeitspunkt im Wesentlichen durch den Dunkelstrom der Diode bestimmt.

Gegenstand der DE 199 40 476 A1 ist eine Laserschutzwand, in der sich ein Laserstrahlung detektierender Sensor befindet, der ein Licht- oder Wärmesensor sein kann.

Der Erfindung liegt die Aufgabe zugrunde, eine optische Sensorik für insbesondere aktive Laserschutzwände oder Strahlenschutzelemente einzusetzen, wobei deren Funktionsfähigkeit zu überprüfen ist, ohne eine aktive optische Prüfung mit Lichtquellen oder Strahlenquellen innerhalb des optisch zu überwachenden Volumens einsetzen zu müssen.

Als Anwendungen sollen sich insbesondere alternative aktive Laserschutzwandsensoren, aktive Laserschutzwände, aktive Laserschutzwandelemente (und auch deren Vorbauvariante vor einer passiven Schutzwand) und aktive Laserschutzkabinen ergeben.

Ausgangspunkt der Erfindung kann die bekannte Überwachung eines Hohlraumes gegen eindringende Strahlung wie Laserstrahlung sein, wie aus dem vorgenannten Stand der Technik zu entnehmen ist.

Zur Lösung der Aufgabe ist vorgesehen, dass als der optische Sensor ein Sensor mit Dunkelstrompulsen verwendet wird, die als Funktionsfähigkeitssignal des Sensors ausgewertet werden.

Insbesondere wird als Sensor eine SPAD (Single Photon Avalanche Diode) verwendet. Diese Sensoren werden eingesetzt, um sogar einzelne Photonen zu detektieren und sind damit extrem empfindlich.

Kennzeichnend für diese Sensoren ist, dass sie entgegen ihrer Sperrrichtung mit entsprechend hoher Spannung beaufschlagt kurz vor dem Durchbruch stehen. Einfallendes Licht erzeugt sodann freie Ladungsträger, die über einen Lawinendurchbruch sodann für einen Strom in Sperrrichtung der SPAD sorgen.

Wird der Strom unterbrochen (bzw. sinkt die Spannung unter die Durchbruchsspannung), so ebbt der Strom ab und die SPAD nimmt ihren gesperrten Zustand ein und kann anschließend mit Spannung beaufschlagt werden. Mit einfallendem Licht wird sodann erneut ein Strompuls ausgelöst, so dass sich abhängig vom einfallenden Licht eine Kette von Strompulsen ergibt.

Charakteristisch für diese SPAD Dioden ist aber zusätzlich, dass auf Grund der "hohen" angelegten Spannung auch thermisch bedingt schon Lawinendurchbrüche auftreten und somit auch ohne Lichteinfall eine temperaturabhängige Strompulsrate auftritt. Daher sind erhältliche SPAD-Module auch üblicherweise aktiv mit Peltierelemeten gekühlt, um sie auf konstanter Temperatur halten zu können und somit für eine konstante "Dunkelstrompulsrate" zu sorgen.

Auch die APD (Avalanche Photo Diode), im "Geiger Modus" betrieben, kommt für die Erfindung als Sensor in Frage.

Diese Erfindung nutzt genau diese "Dunkelstrompulse" als Funktionsfähigkeitssignal der Sensoren, denn
- bleiben diese Pulse aus, ist der Sensor defekt.
- Schaltet die Diode dauernd durch, trifft entweder viel Licht auf die Diode, so dass sie nicht mehr in den Sperrzustand gelangen kann oder sie hat einen internen Kurzschluss.
- Tritt einer dieser Fälle ein, dann muss ein Signal wie Abschaltsignal erzeugt werden, um für die Beeinflussung wie Abschaltung der Licht- wie Prozesslaserstrahlquelle zu sorgen.

Liegt die Diode oberhalb eines durch die Temperatur bedingten Limits an Strompulsen pro Zeiteinheit (also oberhalb der "Dunkelstrompulsrate"), dann ist von Lichteinfall auf die Diode auszugehen, und somit ein Durchbruch z. B. eines Laserschutzwandelements oder einer Laserschutzwand gegeben, so dass ein Abschaltsignal für die Abschaltung der Prozesslaserstrahlquelle erzeugt werden muss. Dies wäre der normale "Schutzfall" für diese Diode in ihrer Anwendung in einer aktiven Laserschutzwand.

Die Beschaltung der Diode kann bekanntermaßen rein passiv mit einem vorgeschalteten Widerstand ausgeführt werden (passives Quenching), um das genannte Pulsverhalten zu erzeugen. Die passive Beschaltung hat jedoch den Nachteil, einer längeren "Erholzeit" der SPAD, so dass auch mit der Erkennung des Strompulses aktiv die Spannung abgesenkt werden und anschließend wieder angehoben werden kann, um eine verkürzte Erholzeit zu erzielen (aktives Quenching). Die "Erholzeit" stellt gleichzeitig eine Blindphase des Sensors dar, da in dieser Zeit keine Photonen detektiert werden können. Daher muss diese entsprechend der Anwendung kurz gewählt werden.

Das erfindungsgemäße Verfahren wertet also Strom- oder Spannungspulse eines oder mehrerer aktiv oder passiv pulsenden Licht- oder Strahlungssensors aus, wobei dieser Sensor auch bei Dunkelheit in einem geschlossenen Volumen noch ständig Strom- oder Spannungspulse erzeugt.

Die Pulse werden in eine Frequenz oder Zählrate umgesetzt. Diese Frequenz oder Pulsrate wird hinsichtlich einer Mindestpulsrate überwacht. Wird die Mindestpulsrate unterschritten, so wird ein Abschaltsignal generiert, was z. B. zur Abschaltung eines Laserstrahles führt.

Weiterhin wird diese Frequenz oder Pulsrate bezüglich einer Maximalpulsrate überwacht. Wird diese Maximalpulsrate überschritten, so wird gleichfalls vorzugsweise ein Abschaltsignal generiert, was zur Abschaltung z. B. eines Laserstrahles führt.

Zur sicherheitsgerichteten Überwachung erfolgt diese Pulsauswertung zweifach in unterschiedlichen Auswertepfaden.

Weiterhin können die so überwachten Schutzwandelemente bzw. Volumina von doppelwandigen Schutzgehäusen über verschließbare Öffnungen verfügen. Durch Öffnen der Öffnung ist ein Test der Sensoren durch einfallendes Licht gleichfalls möglich, z.B. für den Abschlusstest nach Herstellung des Wandelements oder für regelmäßige Tests, wenn eine Verschmutzung der Sensoren innerhalb der geschlossenen Elemente nicht ausgeschlossen werden kann.

Unabhängig vom Pulszählratenverfahren kann die aktive Schutzwand zum Test der Sensoren auch im einfachsten Fall eine automatisch betätigte Klappe zum Verschluss der Öffnung für Sensortests aufweisen.

Alternativ kann die Öffnung auch durch optisch schaltende Elemente verschlossen werden, die ggf. auch nur einen Teil des Empfangsspektrums der Sensoren schaltbar transmittieren. Durch diese automatisch zu Öffnende und zu schließende Öffnung kann Licht von außen in die Wand eindringen und muss für ein entsprechendes Ansprechen der Sensoren sorgen. Bleibt dieses Ansprechen aus, wird ein Abschaltsignal generiert, was zur Abschaltung eines Laserstrahles führt.

Die Erfindung kennzeichnenden Merkmale ergeben sich sowohl aus der Beschreibung, als auch den Ansprüchen, die in Bezug auf ihre Merkmalskombinationen jedoch nicht einschränkend zu verstehen sind. Vielmehr sind einzelne der insgesamt, also insbesondere in der Beschreibung, offenbarten Merkmale für sich als auch in möglichen Kombinationen als erfinderisch zu bewerten.

## Patentansprüche

1. Verfahren zur Überprüfung der Funktionsfähigkeit eines optischen Sensors, der eine Strahlung einer Strahlenquelle überwacht, wobei der optische Sensor bei Beaufschlagung mit der Strahlungsquelle ein Abschaltsignal für die Strahlenquelle erzeugt,
**dadurch gekennzeichnet,**
**dass** als der optische Sensor ein Sensor mit Dunkelstrompulsen verwendet wird, die als Funktionsfähigkeitssignal des Sensors ausgewertet werden.

2. Verfahren nach Anspruch 1,
**dadurch gekennzeichnet,**
**dass** der Sensor als aktiver oder passiver Sensor ausgeführt wird.

3. Verfahren nach Anspruch 1 oder 2,
**dadurch gekennzeichnet,**
**dass** als Sensor eine Single Photon Avalanche Diode (SPAD) oder Avalanche Photo Diode (APD) verwendet wird.

4. Verfahren nach zumindest einem der vorhergehenden Ansprüche,
**dadurch gekennzeichnet,**
**dass** die Pulsrate des Sensors auf eine Mindestpulsrate und eine Maximalpulsrate überwacht wird, wobei beim Unterschreiten der Mindestpulsrate und beim Überschreiten der Maximalpulsrate die von dem Sensor zu detektierende Strahlung beeinflusst, insbesondere abgeschaltet wird.

5. Verfahren nach zumindest einem der vorhergehenden Ansprüche,
**dadurch gekennzeichnet ,**
**dass** die Auswertung der Pulsrate zweifach in unterschiedlichen Auswertepfaden erfolgt.

6. Verfahren nach zumindest einem der vorhergehenden Ansprüche,
**dadurch gekennzeichnet,**
**dass** der Sensor in einer Schutzeinhausung und/oder innenseitig an einer Strahlenschutzwand, insbesondere passiven Strahlenschutzwand, angeordnet wird.

7. Verfahren nach zumindest einem der vorhergehenden Ansprüche,
**dadurch gekennzeichnet,**
**dass** der den Sensor aufnehmende Raum kontrolliert über eine verschließbare Öffnung mit einer insbesondere von der zu überwachenden Strahlung abweichenden Strahlung beaufschlagt wird.

## Claims

1. Method for checking the functionality of an optical sensor, which monitors radiation from a radiation source, wherein the optical sensor when subjected to the radiation source generates a cut-off signal for the radiation source,
**characterised in that**
as the optical sensor a sensor with dark current pulses is used, which are evaluated as a functionality signal of the sensor.

2. Method according to claim 1,
**characterised in that**
the sensor is designed as an active or passive sensor.

3. Method according to claim 1 or 2,
**characterised in that**
a single photon avalanche diode (SPAD) or avalanche photo diode (APD) is used as the sensor.

4. Method according to at least one of the preceding claims,
**characterised in that**
the pulse rate of the sensor is monitored for a minimum pulse rate and a maximum pulse rate, wherein when the minimum pulse rate is fallen below and when the maximum pulse rate is exceeded, the radiation to be detected by the sensor is influenced, in particular cut off.

5. Method according to at least one of the preceding claims,
**characterised in that**
the evaluation of the pulse rate takes place twice in different evaluation paths.

6. Method according to according to at least one of the preceding claims,
**characterised in that**
the sensor is arranged in a protective housing and/or inside on a radiation protection wall, in particular a passive radiation protection wall.

7. Method according to at least one of the preceding claims,
**characterised in that**
the space receiving the sensor is charged in a controlled manner via a closable opening with radiation which differs in particular from the radiation to be monitored.

## Revendications

1. Procédé pour vérifier le fonctionnalité d'un capteur optique qui surveille le rayonnement d'une source de rayonnement, le capteur optique générant un signal d'arrêt pour la source de rayonnement lorsqu'il est exposé à la source de rayonnement,
**caractérisé en ce qu'**on utilise en tant que capteur optique un capteur avec des impulsions de courant d'obscurité qui sont évaluées comme signal de fonctionnalité du capteur.

2. Procédé selon la revendication 1,
**caractérisé en ce que** le capteur est réalisé en tant que capteur actif ou passif.

3. Procédé selon la revendication 1 ou 2,
**caractérisé en ce qu'**on utilise en tant que capteur une diode avalanche à photon unique (SPAD) ou une photodiode avalanche (APD).

4. Procédé selon au moins l'une des revendications précédentes,
**caractérisé en ce que** le taux d'impulsion du capteur est surveillé quant à une taux d'impulsion minimum et un taux d'impulsion maximum, le rayonnement à détecter par le capteur étant influencé, en particulier désactivé, si la fréquence de l'impulsion tombe en dessous du taux d'impulsion minimum et dépasse le taux d'impulsion maximum.

5. Procédé selon au moins l'une des revendications précédentes,
**caractérisé en ce que** l'évaluation du taux d'impulsion est effectuée deux fois dans des voies d'évaluation différentes.

6. Procédé selon au moins l'une des revendications précédentes,
**caractérisé en ce que** le capteur est agencé dans un boîtier de protection et/ou à l'intérieur sur un mur de protection contre les rayonnements, en particulier un mur de protection passive contre les rayonnements.

7. Procédé selon au moins l'une des revendications précédentes,
**caractérisé en ce que** l'espace contenant le capteur est exposé de manière contrôlée, par l'intermédiaire d'une ouverture pouvant être fermée, à un rayonnement qui s'écarte notamment du rayonnement à surveiller.
